# EUROPEAN PATENT APPLICATION

(11) **EP 1 830 545 A2**
(43) Date of publication of application: **05.09.2007**
(21) Application number: 07010254.6
(22) Date of filing: 04.04.2005
(51) Int. Cl.: H04M 1/725, A63F 13/00

(54) **Motion-based user input for a wireless communication device**

(30) Priority: 07.09.2004 US 935042
(62) Divisional of application: 05732746.2
(71) Applicant: Sony Ericsson Mobile Communications AB, 221 88 Lund (SE)
(72) Inventor: Ashman, William C., Jr., Durham, NC 27705 (US); Hill, Larry P., Apex, NC 27502 (US)
(74) Representative: HOFFMANN EITLE

(57) **Abstract**

A method and apparatus for executing a pre-defined function responsive to user-generated motion is described herein. In exemplary embodiments, executing the pre-defined functions includes implementing a random chance game, answering an incoming call, terminating a call, initiating a call with a user-specified recipient, powering up the wireless communication device, activating a desired operating mode or feature associated with the wireless communication device, etc. In some exemplary embodiments, the wireless communication device (100) may also determine one or more characteristics of the detected motion, and execute a specific function based on the determined characteristics.

## Description

### BACKGROUND OF THE INVENTION

The present invention relates generally to interfacing with a wireless communication device, and more particularly to a motion-based user interface.

Conventional cellular telephones include many different input means, such as a keypad, joystick, control buttons, etc., to enable users to interface with the cellular telephone. For example, a user may press a button to power up the cellular telephone. Further, a user may press a "Send" or "Talk" button to initiate a call with a specified recipient, to terminate a call, or to answer an incoming call. Further still, a user may use the input means to navigate menus and enter commands to execute selected functions associated with the cellular telephone.

However, conventional input means are often cumbersome and/or inconvenient. For example, a user playing a game on a cellular telephone often has to navigate a series of menus to start the game or to reset the game. Further, conventional input means may pose a safety hazard when used under certain circumstances. For example, in order for a driver traveling on a highway to answer an incoming call, the driver typically has to take his/her eyes off of the road to locate the appropriate control button to answer the call.

### SUMMARY OF THE INVENTION

The present invention comprises a method and apparatus that executes or performs a pre-defined function responsive to detecting a user-generated motion. In one exemplary embodiment, a wireless communication device executes a user-assigned function responsive to detecting the motion. In another exemplary embodiment, the wireless communication device may determine one or more characteristics of the detected motion, select a pre-defined function based on the determined characteristics, and perform the selected function.

According to the present invention, the pre-defined function comprises at least one of a communication function, a wireless communication device function, or a game function. For example, when the function comprises a communication function, the wireless communication device may initiate a call to a user-specified recipient, answer a call, or terminate a call responsive to detecting the motion. Alternatively, when the function comprises a game function, the wireless communication device may randomly select an outcome from a set of possible outcomes responsive to detecting the motion. The selected outcome may then be displayed on a display associated with the wireless communication device.

An exemplary wireless communication device of the present invention comprises a motion sensor and a function processor. According to one exemplary embodiment, the function processor comprises a game processor that randomly selects an outcome from a set of possible outcomes responsive to the detected motion. A display associated with the wireless communication device displays the selected outcome. According to still another exemplary embodiment, the function processor comprises a communication processor that initiates a call to a user-specified recipient, answers an incoming call, or terminates a call responsive to the detected motion.

According to the present invention, the motion sensor detects user-generated motion associated with the wireless communication device. Responsive to the detected motion, the function processor executes the pre-defined function. In another exemplary embodiment, the wireless communication device also includes a motion processor to determine one or more characteristics of the detected motion. Based on the characteristics, the function processor performs a pre-defined function.

According to one exemplary embodiment, the motion processor may comprise a vibration circuit and a processor. The vibration circuit generates an output electrical signal, such as an output current or voltage, responsive to motion applied to the wireless communication device. Based on the output electrical signal, the processor detects the motion.

### BRIEF DESCRIPTION OF THE DRAWINGS

Figure 1 illustrates a block diagram of one exemplary embodiment of a wireless communication device according to the present invention.
Figure 2 illustrates a flow chart for one exemplary method of implementing the present invention.
Figures 3A - 3B illustrate one exemplary game according to the present invention.
Figure 4A - 4B illustrate another exemplary game according to the present invention.
Figures 5A - 5B illustrate another exemplary game according to the present invention.
Figures 6A - 6B illustrate another exemplary game according to the present invention.
Figure 7 illustrates a block diagram for one exemplary function processor according to the present invention.
Figure 8 illustrates a block diagram for one exemplary motion sensor according to the present invention.
Figures 9A - 9C illustrate menu options for user defined functions and motion according to one embodiment of the present invention.
Figure 10 illustrates a flow chart for one exemplary method of implementing the present invention.

### DETAILED DESCRIPTION OF THE INVENTION

The present invention describes a wireless communication device and a corresponding method for automatically executing or performing a function responsive to a user-generated motion. As used herein, the term "wireless communication device" may include a cellular radiotelephone with or without a multi-line display; a Personal Communication System (PCS) terminal that may combine a cellular radiotelephone with data processing, facsimile, and data communication capabilities; a Personal Digital Assistant (PDA) that can include a radiotelephone, pager, Intemet/intranet access, web browser, organizer, calendar, and/or a global positioning system (GPS) receiver; a conventional laptop and/or palmtop receiver; or other appliance or mobile station that includes a radiotelephone transceiver.

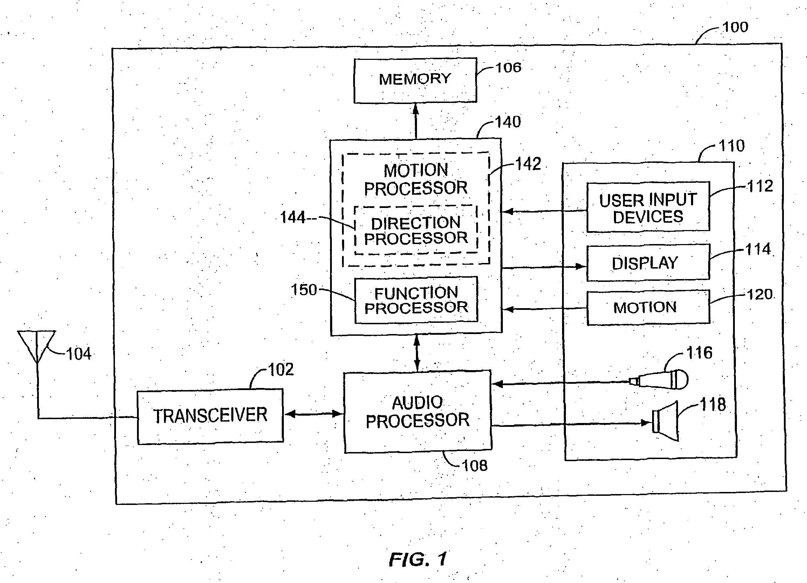

Figure 1 illustrates an exemplary wireless communication device 100 according to one or more embodiments of the present invention. Wireless communication device 100 includes a transceiver 102, antenna 104, memory 106, audio processor 108, user interface 110, and a system processor 140. Transceiver 102 is coupled to antenna 104 for receiving and transmitting wireless signals. The transceiver 102 is a fully functional cellular radio transceiver, which may operate according to any known standard, including the standards known generally as the Global System for Mobile Communications (GSM), TIA/EIA-136, cdmaOne, cdma2000, UMTS; and Wideband CDMA. In addition, transceiver 102 may include baseband processing circuits to process signals transmitted and received by the transceiver 102. Alternatively, baseband processing circuits may be incorporated in the system processor 140.

User interface 110 includes one or more user input devices 112, a display 114, a microphone 116, and a speaker 118, and enables the user to interact with and control wireless communication device 100. The user input devices 112 may include any of a keypad, touchpad, joystick control dials, control buttons, other input devices, or a combination thereof. A voice recognition system may also be included to receive user voice input. The user input devices 112 allow the operator to dial numbers, enter commands, scroll through menus and menu items presented to the user on display 114, and make selections. Display 114 allows the operator to view information such as menus and menu items, dialed digits, images, call status information, and output from user applications.

Microphone 116 receives audio input from the user, while speaker 118 projects audible sound to the user. In particular, microphone 116 converts the detected speech and other audible signals into electrical audio signals and speaker 118 converts analog audio signals into audible signals that can be heard by the user. Audio processor 108 receives analog audio inputs from microphone 116 and provides the basic analog output signals to speaker 118.

In addition to the above-described devices, user interface 110 includes a motion detector 120. As discussed further below, motion detector 120 detects user-generated motion associated with the wireless communication device 100.

System processor 140 performs various processing tasks, including controlling the overall operation of wireless communication device 100 according to programs stored in memory 106. Memory 106 may include both random access memory (RAM) and read-only memory (ROM). Computer program instructions and data required for operation of wireless communication device 100 are stored in non-volatile memory, such as EPROM, EEPROM, and/or flash memory, which may be implemented as discrete devices, stacked devices, or integrated with system processor 140.

The system processor 140 may be implemented in hardware; firmware, software, or a combination thereof, and may comprise a single microprocessor or multiple microprocessors. The microprocessors may be general purpose microprocessors, digital signal processors, or other special purpose processors. Functions performed by system processor 140 may include signal processing, image processing, and control of the overall operation of wireless communication device 100. In accordance with the present invention, and as discussed in greater detail below, signal processor 140 includes a function processor 150, and may optionally include a motion processor 142.

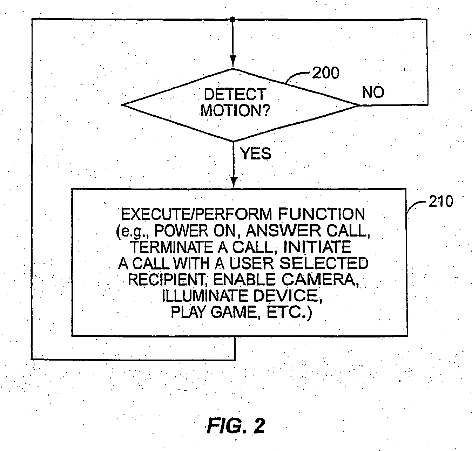

According to one exemplary embodiment, illustrated in Figure 2, function processor 150 waits for motion detector 120 to detect motion associated with the wireless communication device 100 (block 200). When motion is detected, the function processor 150 executes or performs a pre-defined function associated with the detected motion (block 210).

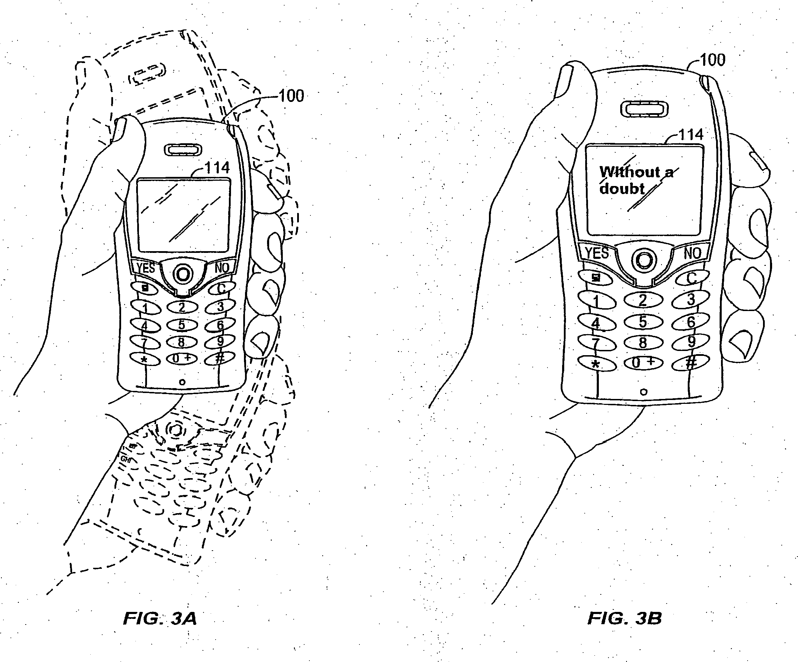

in one embodiment, the pre-defined function comprises a game, such as a random chance game. Figures 3A and 3B illustrate one exemplary game that may be implemented by function processor 150. in the illustrated embodiment, the game is a random question-and-answer type-game, such as the Magic 8 Ball^{®} game. As shown in Figure 3A, a user applies motion to the wireless communication device 100. In response, display 114 displays an answer randomly selected by function processor 150, as shown in Figure 3B.

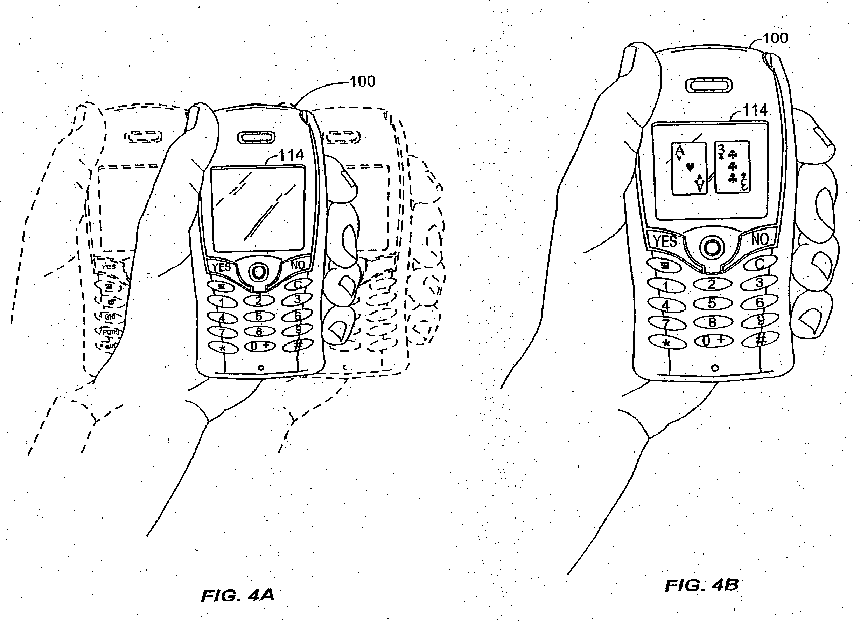

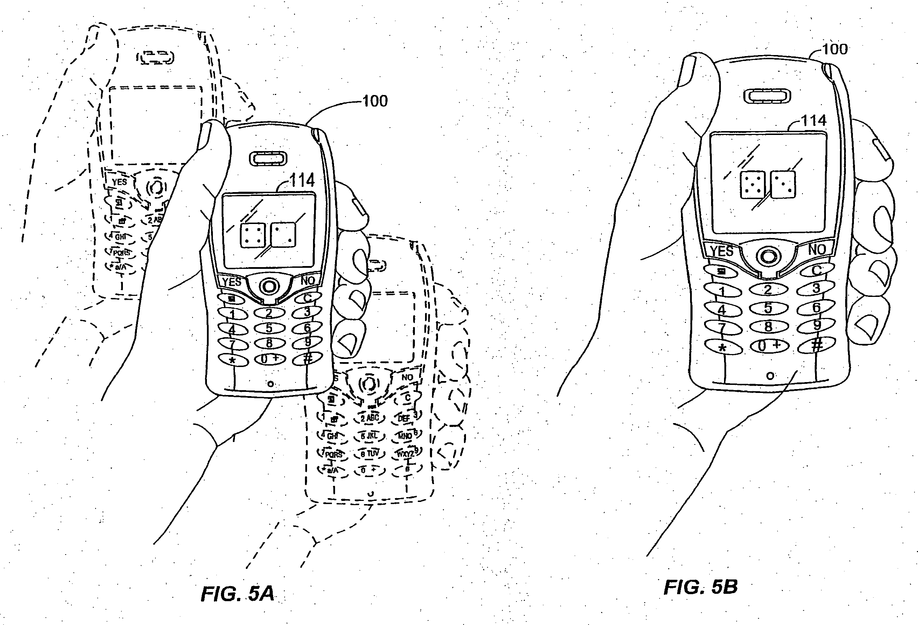

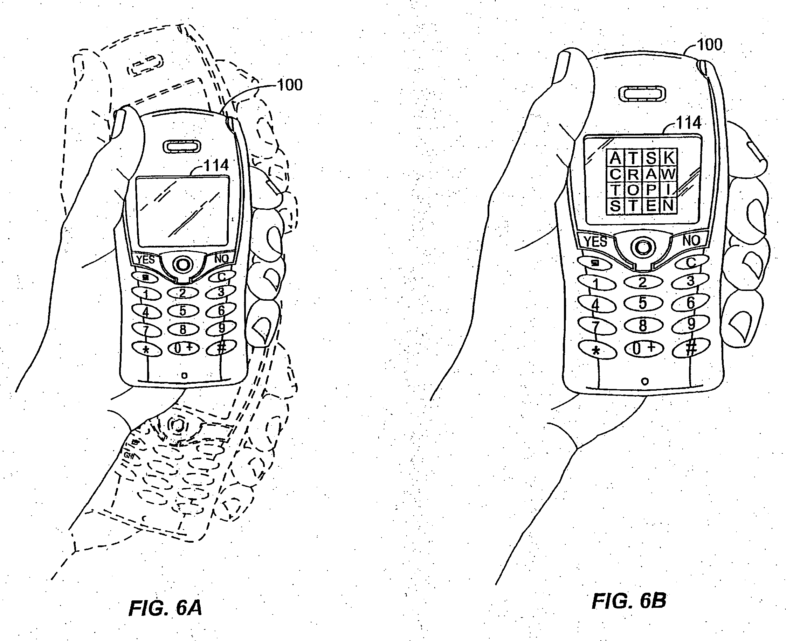

It will be appreciated that the present invention is not limited to the random question-and-answer game illustrated in Figures 3A - 3B, and may apply equally well to other random chance games. For example, as shown in Figures 4A - 4B, a user may apply motion to the wireless communication device 100 to play a card game. In response to the detected motion, display 114 displays one or more playing cards randomly selected by function processor 150 according to any desired card game, such as Black Jack, Solitaire, Poker, Bridge, Pinochle, etc. Alternatively, the user may simulate rolling a die or dice by applying motion to the wireless communication device 100, as shown in Figure 5A. In response to the user-generated motion, display 114 displays a numerical die or dice outcome randomly selected by function processor 150, as shown in Figure 5B. In still another embodiment, the die or dice may display alphabetic characters instead of numerical characters. For example, a user may use alphabetic "dice" to play a word game, such as Boggle^{®}. As shown in Figures 6A - 6B, applying motion to the wireless communication device 100 results in the random generation of a new Boggle^{®} game board, where display 114 displays the resulting game board. In any event, responsive to applying motion to the wireless communication device 100, function processor 150 randomly selects an outcome from a set of possible outcomes based on a desired game. Further, in addition to starting a game, i.e., rolling the dice for the first time, it will be appreciated that applying motion to the wireless communication device 100 may reset the game, i.e., re-roll the dice, as shown in Figures 5A - 5B.

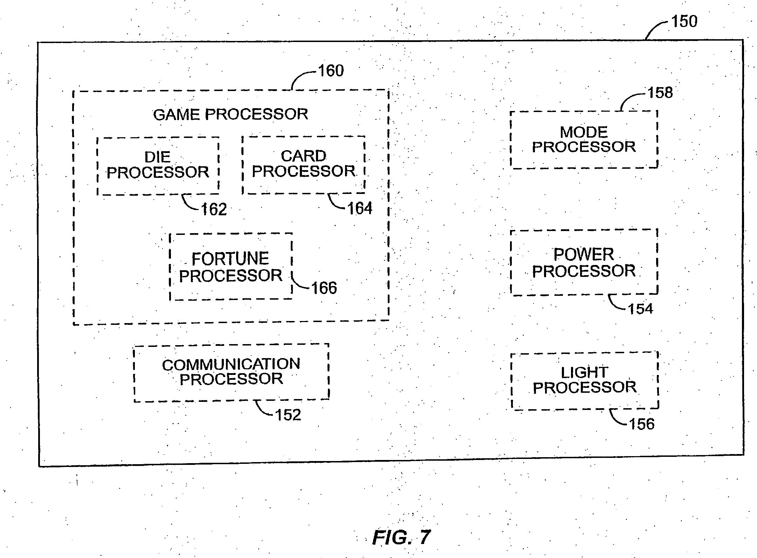

To implement the desired game, function processor 150 retrieves instructions from memory 106 associated with the desired game and executes the instructions. Alternatively, function processor 150 may include a game processor 160, as shown in Figure 7, to retrieve and execute the game instructions. In general, game processor 160 implements a random chance game in response to user-generated motion detected by motion detector 120. To that end, game processor 160 may include an individual processor for each game available to the user, such as the die processor 162, the card processor 164, and the fortune processor 166, as shown in Figure 7. According to the present invention, die processor 162 executes instructions to randomly select a die or dice output from a set of possible die or dice output, as described above. Card processor 164 executes instructions to randomly select one or more playing cards from a set of possible playing cards to provide a virtual hand of cards to the user responsive to the user-generated motion, while fortune processor 166 executes instructions to randomly select an answer from a set of possible answers to simulate a question-and-answer game, such as the Magic 8 Ball^{®} game, in response to the user-generated motion.

The game processor 160 shown in Figure 7 comprises separate processors for each game. However, it will be appreciated that game processor 160 may consolidate two or more of the individual processors into one or more processors. Further, it will be appreciated that the present invention is not limited to the specific games illustrated and discussed herein; game processor 160 and/or function processor 150 may implement other random chance games not expressly shown or discussed herein.

The above describes the invention in terms of various games that are implemented by applying motion to the wireless communication device 100. However, the present invention is not limited to motion-initiated games. According to one exemplary embodiment, function processor 150 may alternatively or additionally include any number of processors that perform a variety of functions responsive to the user-generated motion. For example, function processor 150 may include a communication processor 152, a power processor 154, a light processor 156, and/or a mode processor 158.

Communication processor 152 executes instructions for a wireless communication function responsive to the user-generated motion. For example, by applying motion to the wireless communication device 100, the communication processor 152 may initiate a call with a user-specified recipient, answer an incoming call, or terminate a call. In addition, communication processor 152 may initiate a packet data communication, such as an email, Internet search, etc., responsive to the user-generated motion.

Power processor 154 executes instructions to power up the wireless communication device 100 or to wake up the wireless communication device 100 from a sleep mode, while light processor 156 activates one or more illumination devices, such as a display backlight, keypad illumination device, etc., responsive to the user-generated motion. Similarly, mode processor 158 places the wireless communication device 100 in a desired operating mode re sponsive to the user-generated motion. As used herein, "operating mode" refers to a mode of operation of the wireless communication device 100 that requires interaction with the user. Exemplary operating modes include a camera mode for operating a camera associated with the wireless communication device 100, a communication mode for implementing wireless communication processes with the wireless communication device 100, etc.

The function processor 150 shown in Figure 7 comprises various individual processors associated with individual functions. However, it will be appreciated that function processor 150 may consolidate two or more of the individual processors into one or more processors. Further, it will be appreciated that the present invention is not limited to the specific functions or processors illustrated and discussed herein.

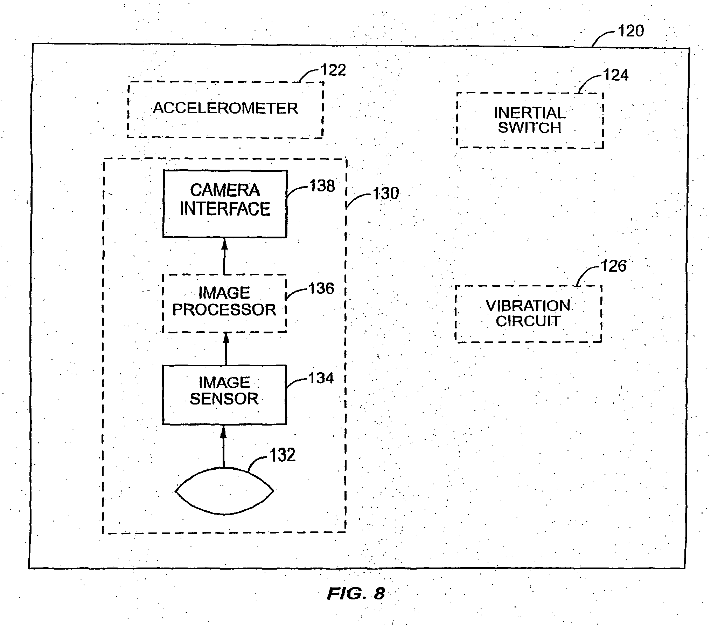

As discussed above, a wireless communication device 100 according to the present invention executes a desired function when at least one motion detector 120 in wireless communication device 100 detects user-generated motion. As shown in Figure 8, motion detector 120 may comprise any type of motion detector 120 known in the art, such as an accelerometer 122, inertial switch 124, etc. As discussed further below, the motion detector 120 may comprises multiple sensors arranged to detect motion along multiple axes.

In addition, motion detector 120 may comprise a camera 130 configured to detect the user-generated motion. Camera 130 captures all or part of images according to any means known in the art, and may comprise a digital still camera or a video camera. More specifically, camera 130 includes lens assembly 132, image sensor 134, image processor 136, and camera interface circuits 138. Lens assembly 132, comprising a single lens or a plurality of lenses, collects and focuses visible or infra-red light onto image sensor 134. Image sensor 134 captures images formed by light collected and focused by lens assembly 132. Image sensor 134 may be any conventional image sensor 134, such as a charge-coupled device (CCD) or a complementary metal oxide semiconductor (CMOS) image sensor 134. Image processor 136 may process still and/or video images according to any means known in the art. In addition, image processor 136 may process the captured image to detect motion associate with the wireless communication device 100, such as by comparing successive frames or images to detect movement therein. Camera interface circuits 138 convert analog image signals output by image processor 136 to digital form and interface the image processor 136 with the system processor 140.

While the illustrated camera 130 includes image processor 136, it will be appreciated that the image processing function may alternatively be performed by system processor 140. In this embodiment, the camera interface 138 converts analog image signals output by image sensor 134 to digital form and interfaces the image sensor 134 with the system processor 140. In any event, by processing all or part of one or more captured images, image processor 136 and/or system processor 140 may detect user-generated motion applied to the wireless communication device 100.

In some exemplary embodiments, motion detector 120 may also comprise a vibration circuit 126. Conventional wireless communication devices 100 typically include some type of vibration circuit. Such circuits vibrate responsive to an electrical signal applied to the vibration circuit to provide silent notification to a user of an incoming call or message. However, according to the present invention, vibration circuit 126 may also be configured to generate an output electrical signal, such as an output electrical current or voltage, responsive to external motion, such as motion applied to a wireless communication device 100. According to one embodiment of the present invention, when the user applies motion to the wireless communication device 100, the applied motion causes components in the vibration circuit 126 to move or vibrate, which in turn causes the vibration circuit 126 to generate electricity. As a result, vibration circuit 126 may generate an output electrical signal. To detect the motion, system processor 140 processes the electrical signal provided by vibration circuit 126 according to any known means.

The present invention is not limited to the specific motion detectors 120 discussed above. Further, it will be appreciated that a wireless communication device 100 according to the present invention may include multiple motion detectors 120 to detect motion associated with the wireless communication device 100.

As discussed above, system processor 140 may execute a desired function based on the general user-generated motion detected by motion detector 120. In addition, system processor 140 may optionally include a motion processor 142 operatively connected to motion detector 120. Motion processor 142 may process the motion detector output to determine one or more characteristics associated with the user-generated motion.

For example, motion processor 142 may determine that the motion is linear, elliptical, etc. In addition, motion processor 142 may include a direction processor 144 to determine one or more general directions associated with the user-generated motion. The general directions include, but are not limited to, horizontal, vertical, diagonal, in-and-out, clockwise, and counterclockwise directions. For example, when wireless communication device 100 is moved left to right, as shown in Figure 4A, direction processor 144 detects a generally horizontal motion. Alternatively, the direction processor 144 in a wireless communication device 100 moving up and down, as shown in Figure 3A, detects a generally vertical motion, while the direction processor 144 will detect a generally diagonal motion when the wireless communication device 100 is moved back and forth at an angle, as shown in Figure 5A. In addition, direction processor 144 may determine that an elliptical motion is moving in a clockwise or counterclockwise direction. As will be appreciated by those skilled in the art, direction processor 144 may detect a single direction or multiple directions of motion. Further, motion processor 142 may distinguish user-generated motion from, for example, motion associated with dropping the phone. As used herein, "user-generated motion" refers to motion deliberately generated by the user of the wireless communication device 100 to implement the desired function.

By detecting the characteristic(s) of the user-generated motion, a wireless communication device 100 according to one embodiment of the present invention may execute different functions associated with the different characteristic(s) of the user-generated motion. For example, a general shaking motion may be used to play a game, while a clockwise elliptical motion may be used to terminate a call.

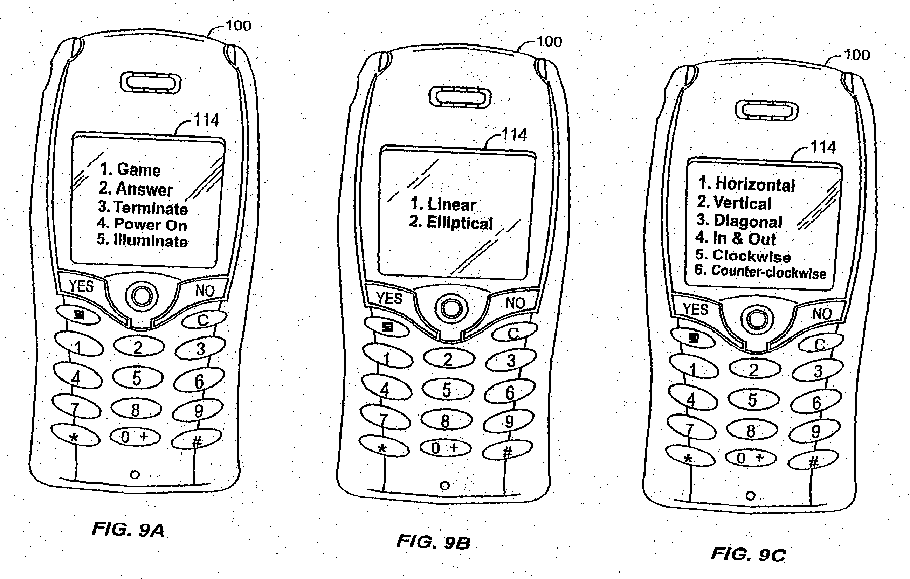

In one embodiment, the wireless provider may pre-program the wireless communication device 100 to associate one or more functions with one or more characteristics of user-generated motion. Alternatively, the user may personalize the motion-induced functionality of the present invention by programming the wireless communication device 100 to associate particular motion characteristic(s) with specific functions. The user may program his/her wireless communication device 100 according to any means known in the art. For example, the user may scroll through a series of menus, as shown in Figures 9A - 9C, to associate a particular function, such as a game, with a particular motion, such as a shaking motion or a linear horizontal motion. In an exemplary embodiment, these user-specified preferences are stored in memory 106. Once programmed, the user simply applies the specified motion to the wireless communication device 100 to execute or perform the desired function. It will be appreciated that the number of functions capable of being executed responsive to the user-generated motion are only limited by the sensitivity and/or directionality of the motion detector 120 and the processing capabilities of the motion processor 142.

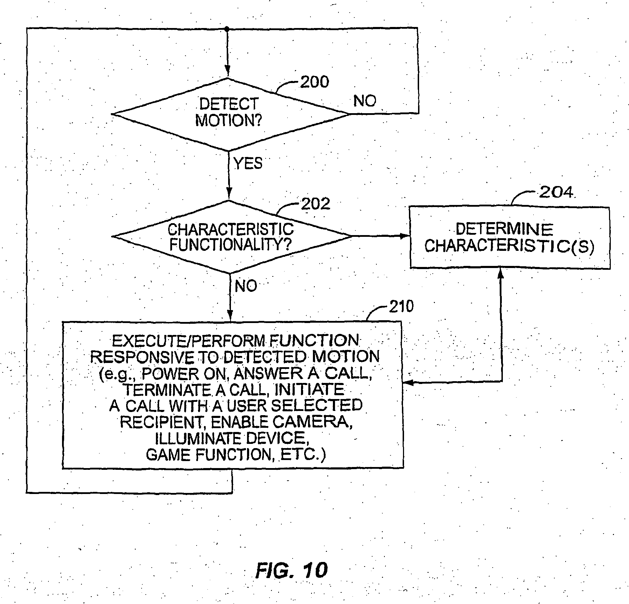

The above-described invention comprises a method for automatically executing or performing a function responsive to a user-generated motion. As shown in Figure 10, a function processor 150 in a wireless communication device 100 waits for a motion detector 120 to detect motion applied to the wireless communication device 100 by the user (block 200). When the system processor 140 includes a motion processor 142 to determine one or more characteristics of the detected motion (block 202), the motion processor 142 determines the characteristic(s) (block 204) and provides the characteristic(s) to the function processor 0. In response, the function processor 150 executes the function associated with the particular characteristics of the motion (block 210). However, when the wireless communication device 100 does not include a motion processor 142, or when there is only one function associated with one motion, the function processor 150 automatically executes the specified function (block 210).

The above-described wireless communication device 100 has several advantages over conventional wireless communication devices. For example, by associating a specific function with a user-generated motion, the user may apply the appropriate motion to the wireless communication device 100 to implement a desired function or capability without having to fumble with the control buttons or navigating menus. As a result, the user may, for example, terminate a call by simply applying motion to the wireless communication device 100 without ever taking his/her eyes off of the road. In addition, the user may participate in a desired game, such as a Magic 8 Ball® game without navigating one or more menus to access the game.

The present invention may; of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

According to the present invention there is described a method of operating a wireless communication device (100) comprising detecting user-generated motion associated with the wireless communication device (100); and executing a pre-selected function responsive to detecting the motion.

According to a further embodiment of the present invention there is described a method further comprising determining one or more characteristics associated with the detected motion.

According to a further embodiment of the present invention there is described a method further comprising selecting the user-assigned function based on the one or more characteristics.

According to a further embodiment of the present invention there is described a method wherein executing the pre-selected function comprises randomly selecting an outcome from a set of possible outcomes responsive to detecting the motion and displaying the selected outcome on a display (114) associated with the wireless communication device (100).

According to a further embodiment of the present invention there is described a method wherein executing the pre-selected function comprises answering an incoming call or terminating a call responsive to detecting the motion.

According to a further embodiment of the present invention there is described a method wherein executing the pre-selected function comprises initiating a call to a user-selected recipient responsive to detecting the motion.

According to a further embodiment of the present invention there is described a method wherein executing the pre-selected function comprises activating one or more illumination devices associated with the wireless communication device (100) responsive to detecting the motion.

According to a further embodiment of the present invention there is described a method wherein executing the pre-selected function comprises powering up the wireless communication device (100) responsive to detecting the motion.

According to a further embodiment of the present invention there is described a method wherein executing the pre-selected function comprises enabling a camera (130) associated with the wireless communication device (100) responsive to detecting the motion.

According to the present invention there is described a method of operating a wireless communication device (100) comprising detecting a user-generated motion associated with the wireless communication device (100); determining one or more characteristics of the detected motion; selecting one of a set of pre-defined functions based on the one or more characteristics; and performing the selected pre-defined function.

According to a further embodiment of the present invention there is described a method wherein the one or more characteristics comprise one or more of an elliptical characteristic, a linear characteristic, and a direction characteristic.

According to a further embodiment of the present invention there is described a method wherein the set of pre-defined functions comprises at least one of a set of game functions, a set of communication functions, and a set of mode functions.

According to the present invention there is described a method of operating a wireless communication device (100) comprising detecting a user-generated motion associated with the wireless communication device (100); randomly selecting an outcome from a set of possible outcomes responsive to detecting the motion; and displaying the selected outcome on a display (114) associated with the wireless communication device (100).

According to a further embodiment of the present invention there is described a method wherein randomly selecting the outcome comprises randomly selecting a die or dice outcome from a set of possible die or dice outcomes, and wherein displaying the selected outcome comprises displaying the selected die or dice outcome.

According to a further embodiment of the present invention there is described a method wherein randomly selecting the die or dice outcome comprises randomly selecting a numerical die or dice outcome from a set of possible numerical die or dice outcomes.

According to a further embodiment of the present invention there is described a method wherein randomly selecting the die or dice outcome comprises randomly selecting an alphabetical die or dice outcome from a set of possible alphabetical die or dice outcomes.

According to a further embodiment of the present invention there is described a method wherein randomly selecting the outcome comprises randomly selecting an answer from a set of possible answers, and wherein displaying the selected outcome comprises displaying the selected answer.

According to a further embodiment of the present invention there is described a method wherein randomly selecting the outcome comprises randomly selecting one or more playing cards from a set of possible playing cards, and wherein displaying the selected outcome comprises displaying the selected playing cards.

According to a further embodiment of the present invention there is described a method wherein the motion comprises a user-generated shaking motion.

According to the present invention there is described a method of operating a mobile station (100) comprising detecting a user-generated motion associated with the mobile station (100); and implementing one of initiating a call to a user-selected recipient, answering an incoming call, or terminating a call responsive to detecting the motion.

According to a further embodiment of the present invention there is described a method further comprising initiating a packet data transmission responsive to detecting the motion.

According to the present invention there is described a method of generating a motion signal in a wireless communication device (100) comprising generating an output electrical signal in a vibration circuit (126) responsive to user-generated motion associated with the wireless communication device (100), wherein the generated output electrical signal is directly related to the motion of the wireless communication device (100); and processing the generated output electrical signal to detect the motion.

According to the present invention there is described a wireless communication device (100) comprising a motion sensor (120) to detect a user-generated motion; and a function processor (150) configured to execute responsive to the detected motion a pre-selected function associated with the detected motion.

According to a further embodiment of the present invention there is described a wireless communication device (100) wherein the function processor (150) comprises a communication processor (152) configured to answer an incoming call or terminate a call responsive to the detected motion.

According to a further embodiment of the present invention there is described a wireless communication device (100) wherein the function (150) processor comprises a game processor (160) configured to randomly select an outcome from a set of possible outcomes responsive to the detected motion.

According to a further embodiment of the present invention there is described a wireless communication device (100) further comprising a display (114) to display the selected outcome.

According to a further embodiment of the present invention there is described a wireless communication device (100) wherein the function processor (150) comprises a mode processor (158) configured to place the wireless communication device (100) in a user-assigned mode responsive to the detected motion.

According to a further embodiment of the present invention there is described a wireless communication device (100) further comprises a camera (130), wherein the mode processor (158) enables the camera (130) responsive to the detected motion.

According to a further embodiment of the present invention there is described a wireless communication device (100) wherein the function processor (150) comprises a power processor (154) configured to power up the wireless communication device (100) responsive to the detected motion.

According to a further embodiment of the present invention there is described a wireless communication device (100) further comprising a motion processor (142) configured to determine one or more characteristics associated with the detected motion.

According to a further embodiment of the present invention there is described a wireless communication device (100) wherein the one or more characteristics comprise one or more direction characteristics, and wherein the motion processor (142) comprises a direction processor (144) configured to determine the one or more direction characteristics associated with the detected motion.

According to a further embodiment of the present invention there is described a wireless communication device (100) further comprising a memory circuit (106) to store a user-assigned function for each of one or more possible characteristics associated with the detected motion.

According to a further embodiment of the present invention there is described a wireless communication device (100) wherein the motion sensor (120) comprises at least one of a camera (130), an inertial switch (124), a vibration circuit (126), and an accelerometer (122).

According to the present invention there is described a wireless communication device (100) comprising a motion sensor (120) to detect user-generated motion associated with the wireless communication device (100); a motion processor (142) configured to determine one or more characteristics of the detected motion; and a function processor (150) to perform a function based on the determined characteristics.

According to a further embodiment of the present invention there is described a wireless communication device (100) wherein the function processor (150) comprises a game processor (160) configured to randomly select an outcome from a set of possible outcomes based on the determined characteristics.

According to a further embodiment of the present invention there is described a wireless communication device (100) wherein the function processor (150) comprises a communication processor (152) configured to answer an incoming call or terminates a call based on the determined characteristics.

According to a further embodiment of the present invention there is described a wireless communication device (100) wherein the function processor (150) comprises a mode processor (158) that configures the wireless communication device (100) in a user defined mode based on the determined characteristics.

According to a further embodiment of the present invention there is described a wireless communication device (100) further comprising one or more illumination devices, wherein the function processor (150) comprises a light processor (156) configured to activate one or more of the illumination devices based on the determined characteristics.

According to a further embodiment of the present invention there is described a wireless communication device (100) wherein the motion sensor (120) comprises at least one of a camera (130), an accelerometer (122), a vibration circuit (126), and an inertial switch (124).

According to the present invention there is described a wireless communication device (100) comprising a motion sensor (120) to detect a user-generated motion associated with the wireless communication device; a game processor (160) configured to randomly select an outcome from a set of possible outcomes responsive to the detected motion; and a display (114) to display the selected outcome

According to a further embodiment of the present invention there is described a wireless communication device (100) wherein the game processor (160) comprises a die processor (162) configured to randomly select a die or dice outcome from a set of possible die or dice outcomes responsive to the detected motion.

According to a further embodiment of the present invention there is described a wireless communication device (100) wherein the die processor (162) is configured to randomly select a numerical die or dice outcome from a set of possible numerical die or dice outcomes.

According to a further embodiment of the present invention there is described a wireless communication device (100) wherein the die processor (162) is configured to randomly select an alphabetical die or dice outcome from a set of possible alphabetical die or dice outcomes.

According to a further embodiment of the present invention there is described a wireless communication device (100) wherein the game processor (160) comprises a fortune processor (166) configured to randomly select an answer from a set of possible answers responsive to the detected motion.

According to a further embodiment of the present invention there is described a wireless communication device (100) wherein the game processor (160) comprises a card processor (164) configured to randomly select one or more cards from a set of possible cards responsive to the detected motion.

According to the present invention there is described a mobile station (100) comprising a motion sensor (120) to detect a user-generated motion associated with the mobile station (100); and a communication processor (150) configured to implement at least one of initiating a call with a user-selected recipient, receiving a call, or terminating a call responsive to the detected user-generated motion.

According to a further embodiment of the present invention there is described a mobile station wherein the communication processor (150) is further configured to initiate a packet data transfer responsive to the detected motion.

According to the present invention there is described a motion sensor (120) in a wireless communication device (100) comprising a vibration circuit (126) configured to generate an output electrical signal responsive to user-generated motion associated with the wireless communication device (100), wherein the output electrical signal is directly related to the motion; and a processor (142) configured to detect the motion based on the output electrical signal.

## Claims

1. A method of operating a wireless communication device (100) comprising:
detecting a user-generated motion associated with the wireless communication device (100);
randomly selecting an outcome from a set of possible outcomes responsive to detecting the motion; and
displaying the selected outcome on a display (114) associated with the wireless communication device (100) .

2. The method of claim 1 wherein randomly selecting the outcome comprises randomly selecting a die or dice outcome from a set of possible die or dice outcomes, and wherein displaying the selected outcome comprises displaying the selected die or dice outcome.

3. The method of claim 2 wherein randomly selecting the die or dice outcome comprises randomly selecting a numerical die or dice outcome from a set of possible numerical die or dice outcomes.

4. The method of claim 2 wherein randomly selecting the die or dice outcome comprises randomly selecting an alphabetical die or dice outcome from a set of possible alphabetical die or dice outcomes.

5. The method of claim 1 wherein randomly selecting the outcome comprises randomly selecting an answer from a set of possible answers, and wherein displaying the selected outcome comprises displaying the selected answer.

6. The method of claim 1 wherein randomly selecting the outcome comprises randomly selecting one or more playing cards from a set of possible playing cards, and wherein displaying the selected outcome comprises displaying the selected playing cards.

7. The method of anyone of claims 1 to 6 wherein the motion comprises a user-generated shaking motion.

8. A wireless communication device (100) comprising:
a motion sensor (120) to detect a user-generated motion associated with the wireless communication device;
a game processor (160) configured to randomly select an outcome from a set of possible outcomes responsive to the detected motion; and
a display (114) to display the selected outcome.

9. The wireless communication device (100) of claim 8 wherein the game processor (160) comprises a die processor (162) configured to randomly select a die or dice outcome from a set of possible die or dice outcomes responsive to the detected motion.

10. The wireless communication device (100) of claim 9 wherein the die processor (162) is configured to randomly select a numerical die or dice outcome from a set of possible numerical die or dice outcomes.

11. The wireless communication device (100) of claim 9 wherein the die processor (162) is configured to randomly select an alphabetical die or dice outcome from a set of possible alphabetical die or dice outcomes.

12. The wireless.communication device (100) of claim 8 wherein the game processor (160) comprises a fortune processor (166) configured to randomly select an answer from a set of possible answers responsive to the detected motion.

13. The wireless communication device (100) of claim 8 wherein the game processor (160) comprises a card processor (164) configured to randomly select one or more cards from a set of possible cards responsive to the detected motion.
